# EUROPEAN PATENT SPECIFICATION

(11) **EP 3 670 995 B1**
(45) Date of publication and mention of the grant of the patent: **07.09.2022**
(21) Application number: 18306763.6
(22) Date of filing: 20.12.2018
(51) Int. Cl.: F16L 53/37, E21B 43/01, E21B 17/00

(54) **HIGH ENERGY HEATING SYSTEM**
HOCHENERGIEHEIZSYSTEM
SYSTÈME DE CHAUFFAGE HAUTE ÉNERGIE

(43) Date of publication of application: 24.06.2020
(73) Proprietor: Nexans, 92400 Courbevoie (FR)
(72) Inventor: IVERSEN, Oyvind, 1406 Ski (NO); HANISCH, Oyvind Pharo, 1162 Oslo (NO)
(74) Representative: Ipsilon

(56) References cited:
- EP-A1- 1 634 010
- EP-A1- 3 319 092
- EP-B1- 2 818 024
- WO-A1-2006/075913
- ARNE NYSVEEN ET AL: "Direct Electrical Heating of Subsea Pipelines-Technology Development and Operating Experience", IEEE TRANSACTIONS ON INDUSTRY APPLICATIONS, IEEE SERVICE CENTER, PISCATAWAY, NJ, US, vol. 43, no. 1, 1 January 2007 (2007-01-01), pages 118-129, XP011161705, ISSN: 0093-9994

## Description

The present invention relates to a heating system for oil and gas pipelines. Especially the present invention relates to a direct electric heating (DEH) system for oil and gas pipelines which provides intense heating of the pipeline.

### Background

Oil and/or gas pipelines arranged in environments with low temperatures such as subsea pipelines, artic pipelines etc. risk clogging due to formation of gas hydrates and/or accumulation of wax or other compounds with a higher melting point than the surroundings. Different approaches have been used to avoid clogging and/or dissolving solids formed within the pipeline.

Several techniques for heating pipelines are known. These are based on very different technical principals.

DEH is one well-known concept of supplying heat to a pipeline either constantly to maintain the temperature of the transported oil/gas above the solidification temperature/gas hydrate formation temperature or for reheating the pipeline after a production stop or other stop.

As the name indicates, DEH is a technique based on direct heating, in that the pipeline is supplied with a parallel DEH cable, the pipeline itself is the second current conductor. AC current is supplied via the DEH cable to the fare end of the pipeline and returned via the pipeline to the starting point of the DEH cable. The principle of DEH is for instance disclosed in EP1686301.

Usually the DEH cable is secured to the pipeline, which is often referred to as arranged "piggy-back".

The DEH cable may comprise one or more electrical conductors surrounded by at least one layer of insulation. The DEH cable is a single-phase cable. The DEH cable may when installed in connection with the pipeline be surrounded by a mechanical protection as disclosed in WO2010/108976 or EP1686301.

The DEH cable is a special cable adapted to the DEH purpose. Other types of power cables may include armour of steel or another metal, to strengthen and protect the cable. In a DEH cable such conductive metal armour is avoided as it would interfere with the purpose of the cable.

As the heating developed in the pipe is a direct effect of the current which returns through the pipe, the DEH cable need to have sufficient cross section area. The necessary supply current is a direct result of needed heat development in the pipe. Necessary heat development is a result of factors such as pipe size, thermal insulation of the pipe as well as temperature needed at the pipe wall. For pipelines with an external diameter of 10-18 inches (25.4 - 45.7 cm) conductor cross-section areas of 500-1400 mm² have been used.

For larger oil, gas or condensate pipelines or for situations where very high heating is required the conductor cross section would have to be increased significantly and/or the result could also be that the requirement for heat is not met.

Further, the conventional DEH system is not capable of providing enough heat. For instance, when considering use of DEH for an application on land on a 60 km long 40" (1.01 m) diameter flowline. Utilizing a DEH cable with a conductor cross section of 1600mm² will still not be sufficient when the flowline in some locations is buried/covered with clay or soil.

In the situation where the DEH conductor has a cross-section of about 1000 mm² or more the skin effect becomes dominant. The skin effect is the effect of uneven distribution of current resulting in higher current in the skin/outer area, and inefficient current conducting in the central area of the conductor. As the diameter increases the central area increases compared to the skin area and the skin effect becomes more dominant. Increasing the cross-section of the single DEH conductor above 1000 mm² does not provide full use of the centre of the cable and is hence an ineffective solution.

A traditional DEH system can submit current such that a heat development in the order of 20 - 140 W/m is achieved, measured as Watt per meter pipeline in the longitudinal direction. Either for larger flowlines, or projects where excessive heat development is needed, the traditional system may be insufficient.

Document WO 2006/075913 A1 discloses a system for power supply to subsea installations.

### Objectives of the invention

The present invention aims at providing a system for supplying high amounts of heat to a pipeline.

Further, the invention aims at providing a system for supplying sufficient heat to large diameter pipelines.

The present invention provides a pipeline system with direct electric heating according to claim 1.

The first and second DEH cable will provide heat to the same section of the pipeline. The return current generating the heat will primarily be conducted by a first and second area of the conductive pipe closest to the first and second DEH cable, respectively.

In one aspect of the pipeline system, the system comprises one or more additional DEH cables arranged in parallel along the same section of the pipeline to be heated. By including an additional DEH cable the number of areas on the conductive pipe that are primarily conducting the current is increased by one.

In another aspect of the pipeline system the first and the second DEH cables are arranged on opposite sides of the pipeline.

In a further aspect of the pipeline system, wherein the conductive pipe is a metal pipe, such as a steel pipe.

In yet another aspect of the pipeline system the cross sectional outer diameter of the conductive pipe of the pipeline is larger than 18" (45.72 cm).

The DEH cables may be strapped to the pipeline or secured thereto by other means. In one aspect of the pipeline system the cross-sectional conductor diameter of each of the DEH-cables is between 400 - 1400 mm², preferably between 400 - 1000 mm².

In a further aspect of the pipeline system, the system further comprises connections connecting the DEH cables to the conducting pipe at substantially the same longitudinal position on the pipeline.

In yet another aspect of the pipeline system, the system further comprises at least one connector connected to the conducting pipe and to a power supply cable.

In a further aspect of the pipeline system, the system is adapted to fulfil a heating requirement in the pipeline of more than 110 W/m, preferably more than 140W/m, more preferably more than 150 W/m.

In one aspect of the system it is adapted to provide from 140 - 250 W/m, 150-250W/m, 150-200W/m or 140-180W/m.

The term "DEH-cable" is used herein to refer to a single-phase power cable, comprising at least one conductor surrounded by at least one layer of insulation.

The DEH cable may further comprise one or more semi-conducting layers between the conductor and the at least one layer of insulation. Optionally, one or more layers of hollow profiles surrounds the insulated conductor for impact protection. An outer sheeting may also be included. For subsea installation both the outer sheeting as well as the hollow profiles may comprise openings to the surroundings or be water penetrable, so that when the DEH cable is submerge the water will fill the open spaces in the hollow profiles thereby reducing the buoyancy thereof. The DEH cable may comprise a fibre optical cable for temperature monitoring and/or fault detection. The fibre optical cable may comprise a metal tube in which one or more fibre optical, light transmitting, elements are arranged. The fibre optical cable may be arranged inside the outer sheeting, within one of the layers of hollow profiles or within the cable insulation or between any of these layers.

The present invention is in part based on a new understanding of the conducting of the return current in the pipeline. The longitudinal section of the pipeline to be heated comprises a conductive, often metallic pipe, such as a steel pipe. The pipe is generally made of the same material with a specific conductivity over the longitudinal section to be heated and the pipe will within the tolerance have substantially equal material thickness at every point of the pipeline. The electrical conductivity of the pipe is therefore homogeneous. Based on this it could be expected that the return current providing the heat by being conducted by the pipe would be evenly distributed. The present inventors have realised that the return current, that is providing the heating, will due to the electromagnetic coupling, primarily be conducted in the section of the pipe closest to the DEH cable. From there the heat spreads due to the heat conductivity of the pipe.

By providing more than one DEH cable, the heat will spread from more than one pipe section. This makes it possible to heat large pipelines and or to high temperatures.

### Brief description of the drawings

The invention will be discussed in further detail with reference to the enclosed figures, wherein:
Figure 1 is a prior art illustration of a DEH cable arranged piggy-back on a pipeline.
Figure 2 is a cross sectional illustration of an embodiment of the invention which two DEH cables arranged on the same pipeline.
Figure 3 is a cross sectional illustration of an embodiment of the invention which three DEH cables arranged on the same pipeline.
Figure 4 is a side view illustration of a pipeline system.

### Principal description of the invention

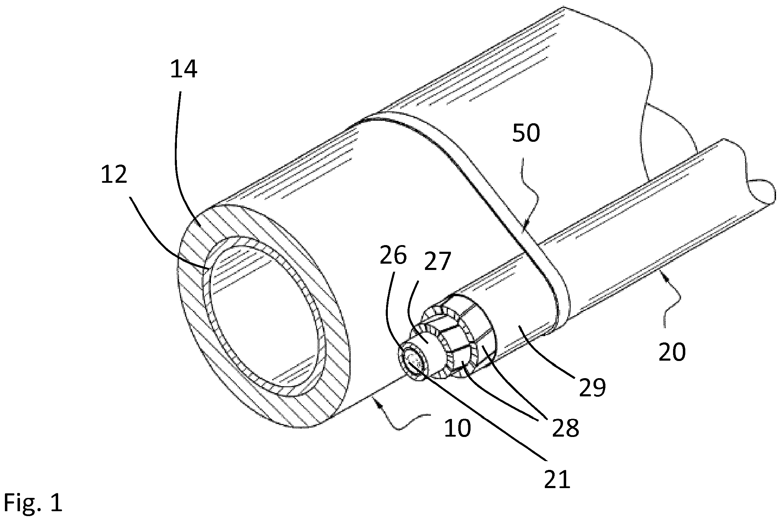

A prior art pipeline system is illustrated on figure 1. On the pipeline 10 a DEH cable 20 is arranged piggy-back on the pipeline. In this solution the DEH cable is secured to the pipeline with a strap 50, other types of fastening are also known.

The illustrated pipeline 10 has an inner metal pipe 12 surrounded by a layer of isolation 14. The isolation 14 thermally isolates the metal pipe 12 as well as providing electrical insulation when the DEH system is in use and current is passed through the metal pipe. The figure is an illustration of one possible configuration of the pipeline and the DEH cable and a person skilled in the art will appreciate that direct electrical heating can be performed on different pipelines as long as it comprises a conductive pipe that can be heated by passing the return current therethrough.

The DEH cable illustrated on figure 1 comprises a central conductor 21 surrounded by a semiconducting layer 26 surrounded by an insulation layer 27, followed by further semiconducting layer/screen (not shown). External protection in the form of hollow profiles 28 are arranged outside the insulation layer 27 and the further semiconducting layer. An outer sheeting 29 covers the outside of the illustrated embodiment of the DEH cable 20.

A person skilled in the art will appreciate that DEH cables with different configurations can be applied in the present invention.

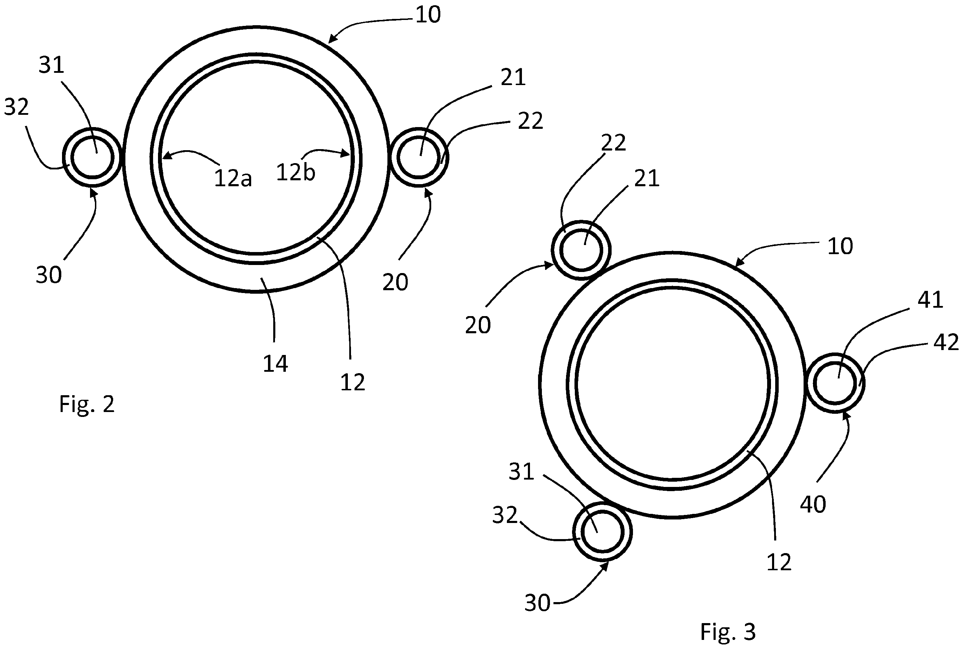

Figure 2 illustrates an embodiment of the present invention, showing the cross-section of a pipeline 10 with two DEH cables 20 and 30 arranged on opposite sides thereof. The DEH cables are outlined here with conducting cores 21,31 surrounded with respective insulation layer 22,32. As discussed above the structure and design of the DEH cable can be freely selected and as such is not limited as long as it fulfils the requirements of a DEH cable as defined herein. In the illustrated embodiment the return current through the pipe 12 will primarily pass through the sections 12a and 12b of the pipe and from here the heat generated by the current will be conducted thermally to the remaining of the pipe 12. In this embodiment of the invention the distance that the heat is required to travel to heat the full circumference of the pipe is reduced by 50% compared to the prior art solution illustrated on figure 1. This solution provides for increasing the amount of current and thereby heat that can be supplied to the pipe which provides for high temperatures and/or increased pipe diameters.

Figure 3 illustrates another embodiment of the present invention, wherein three DEH cables 20,30 and 40 are arranged along the circumference of a pipeline 10. The additional third DEH cable 40 is outlined with a core 41 and insulation 42. The three DEH cables are evenly distributed further significantly reducing the sections of the pipe 12 heated through thermal conductivity and the distance the heat needs to travel. Thereby additional current and heat can be supplied compared to the solution illustrated on figure 2.

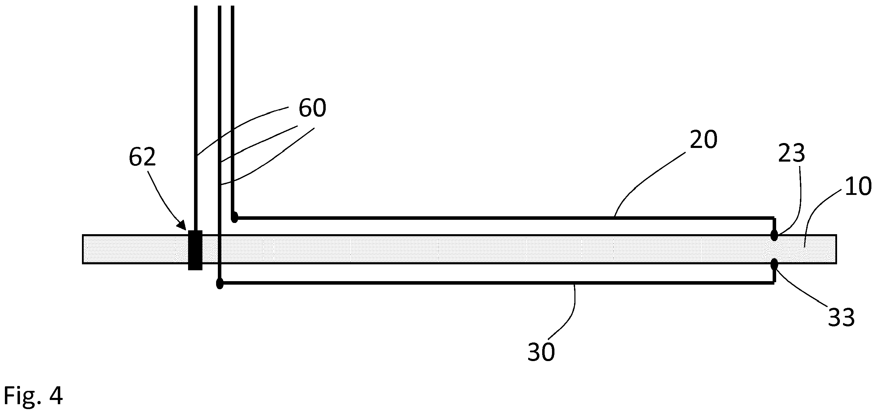

Figure 4 illustrates the pipeline system view from the side. Two DEH cables 20,30 are arranged in parallel along the same pipeline 10 to be heated. A power supply cable 60 is arranged to supply the power for the direct electrical heating. The power supply cable 60 may be one combined power cable but may also be made up of several individual cables. At least one conductor of the power supply cable 60 is via connector 62 connected to the conductive pipe of the pipeline 10. At least two other conductors of the power supply cable are respectively connected to the first and second DEH cable 20,30. At the fare end the first and second DEH cables are connected to the conducting pipe of the pipeline 10 through connections 23,33 respectively.

## Claims

1. Pipeline system with direct electric heating comprising
a pipeline (10) having a conductive pipe (12),
a first DEH cable (20), and
a second DEH cable (30), said first and second DEH cables (20, 30) providing heat to a same section of said pipeline (10);
wherein the first and second DEH cable are arranged in parallel along the same section of the pipeline to be heated, **characterized in that** the DEH cables (20,30,40) are distributed evenly around the pipeline (10).

2. Pipeline system according to claim 1, wherein the system comprises one or more additional DEH cables arranged in parallel along the same section of the pipeline to be heated.

3. Pipeline system according to claim 1 or 2, wherein the conductive pipe is a metal pipe.

4. Pipeline system according to any one of the claims 1 to 3, wherein the cross sectional outer diameter of the conductive pipe (12) of the pipeline (10) is larger than 18" (45.72 cm).

5. Pipeline system according to any one of the claims 1-4, wherein the DEH cables (20,30) are strapped to the pipeline (10).

6. Pipeline system according to any one of the claims 1-5, wherein the cross-sectional conductor diameter of each of the DEH-cables is between 400 - 1000 mm².

7. Pipeline system according to any one of the claims 1-6, wherein the system further comprises connections (23,33) connecting the DEH cables to the conducting pipe at substantially the same longitudinal position on the pipeline.

8. Pipeline system according to any one of the claims 1-7, wherein the system further comprises at least one connector (62) connected to the conducting pipe and to a power supply cable (60).

9. Pipeline system according to any one of the claims 1-8, wherein the system is adapted to fulfil a heating requirement in the pipeline of more than 110 W/m, preferably more than 140W/m, more preferably more than 150 W/m.

## Patentansprüche

1. Rohrleitungssystem mit direkter elektrischer Heizung, umfassend
eine Rohrleitung (10), aufweisend ein leitendes Rohr (12),
ein erstes DEH-Kabel (20) und
ein zweites DEH-Kabel (39), wobei das erste und das zweite DEH-Kabel (20, 30) Hitze an einen gleichen Abschnitt der Rohrleitung (10) bereitstellen,
wobei das erste und das zweite DEH-Kabel parallel entlang des gleichen Abschnitts der Rohrleitung, die erhitzt werden soll, angeordnet sind, **dadurch gekennzeichnet, dass** die DEH-Kabel (20, 30, 40) gleichmäßig um die Rohrleitung (10) verteilt sind.

2. Rohrleitungssystem nach Anspruch 1, wobei das System ein oder mehrere zusätzliche DEH-Kabel umfasst, die parallel entlang des gleichen Abschnitts der Rohrleitung, die erhitzt werden soll, angeordnet sind.

3. Rohrleitungssystem nach Anspruch 1 oder 2, wobei das leitende Rohr ein Metallrohr ist.

4. Rohrleitungssystem nach einem der Ansprüche 1 bis 3, wobei der äußere Querschnittsdurchmesser des leitenden Rohrs (12) der Rohrleitung (10) grösser als 18" (45,72 cm) ist.

5. Rohrleitungssystem nach einem der Ansprüche 1 - 4, wobei die DEH-Kabel (20, 30) an die Rohrleitung (10) befestigt sind.

6. Rohrleitungssystem nach einem der Ansprüche 1 - 5, wobei der Querschnittsdurchmesser des Leiters jedes der DEH-Kabel zwischen 400 - 1000 mm² beträgt.

7. Rohrleitungssystem nach einem der Ansprüche 1 - 6, wobei das System weiter Verbindungen (23, 33) umfasst, die die DEH-Kabel mit dem leitenden Rohr in im Wesentlichen der gleichen Längsposition auf der Rohrleitung verbinden.

8. Rohrleitungssystem nach einem der Ansprüche 1 - 7, wobei das System weiter mindestens einen Verbinder (62) umfasst, der mit dem leitenden Rohr und mit einem Versorgungskabel (60) verbunden ist.

9. Rohrleitungssystem nach einem der Ansprüche 1 - 8, wobei das System ausgelegt ist, um eine Heizanforderung in der Rohrleitung von mehr als 110 W/m, vorzugsweise mehr als 140 W/m, insbesondere mehr als 150 W/m zu erfüllen.

## Revendications

1. Système de canalisation avec chauffage électrique direct, comprenant :
une canalisation (10) ayant un tuyau conducteur (12),
un premier câble DEH (20), et
un second câble DEH (30), lesdits premier et second câbles DEH (20, 30) fournissant la chaleur à une même section de ladite canalisation (10) ;
dans lequel les premier et second câbles DEH sont agencés parallèlement le long de la même section de la canalisation à chauffer, **caractérisé en ce que** les câbles DEH (20, 30, 40) sont répartis régulièrement autour de la canalisation (10).

2. Système de canalisation selon la revendication 1, dans lequel le système comprend un ou plusieurs câbles DEH supplémentaires agencés parallèlement le long de la même section de la canalisation à chauffer.

3. Système de canalisation selon la revendication 1 ou 2, dans lequel le tuyau conducteur est un tuyau en métal.

4. Système de canalisation selon l'une quelconque des revendications 1 à 3, dans lequel le diamètre externe transversal du tuyau conducteur (12) de la canalisation (10) est supérieur à 18" (45,72 cm).

5. Système de canalisation selon l'une quelconque des revendications 1 à 4, dans lequel les câbles DEH (20, 30) sont attachés à la canalisation (10).

6. Système de canalisation selon l'une quelconque des revendications 1 à 5, dans lequel le diamètre conducteur transversal de chacun des câbles DEH est compris entre 400 et 1000 mm².

7. Système de canalisation selon l'une quelconque des revendications 1 à 6, dans lequel le système comprend en outre des raccordements (23, 33) raccordant les câbles DEH au tuyau conducteur sensiblement dans la même position longitudinale sur la canalisation.

8. Système de canalisation selon l'une quelconque des revendications 1 à 7, dans lequel le système comprend en outre au moins un connecteur (62) raccordé au tuyau conducteur et à un câble d'alimentation d'énergie (60).

9. Système de canalisation selon l'une quelconque des revendications 1 à 8, dans lequel le système est adapté pour satisfaire un besoin de chauffage dans la canalisation de plus de 110 W/m, de préférence supérieur à 140 W/m, encore de préférence supérieur à 150 W/m.
